# FASCICULE DE BREVET EUROPEEN

(11) **EP 0 916 471 B1**
(45) Date de publication et mention de la délivrance du brevet: **09.10.2002**
(21) Numéro de dépôt: 98402843.1
(22) Date de dépôt: 17.11.1998
(51) Int. Cl.: B29C 45/44, B29C 45/26, F02D 9/10

(54) **Procédé de fabrication de passages d'axes dans une pièce moulée en plastique, un moule et utilisation du procédé dans un dispositif à volet pour moteurs à combustion interne**
Verfahren zur Herstellung von Durchgängen für Achsen in einem gegossenen Kunststoffteil, eine Form und Verwendung des Verfahrens in einer Klappenvorrichtung für Brennkraftmaschinen
Method for producing passages for axes in a moulded plastic piece, a mould and use of the method in a flap device for internal combustion engines

(30) Priorité: 17.11.1997 FR 9714362
(43) Date de publication de la demande: 19.05.1999
(73) Titulaire: MECAPLAST SAM, MC-98000 Monaco (MC)
(72) Inventeur: Martin, Gérard, 06500 Menton (FR)
(74) Mandataire: Debay, Yves

(56) Documents cités:
- EP-A- 0 701 057
- US-A- 5 715 782
- PATENT ABSTRACTS OF JAPAN vol. 9, no. 282 (M-428), 9 novembre 1985 & JP 60 124218 A (SHARP KK), 3 juillet 1985

## Description

La présente invention concerne un procédé de fabrication de passages d'axes dans une pièce moulée en plastique, le moule et l'utilisation du procédé de fabrication dans un dispositif à volet, par exemple, pour un système d'alimentation de moteurs à combustion interne.

Il est connu dans les alimentations pour moteurs à combustion interne des tubulures d'admission d'air à volet pivotant telles que, par exemple, celles enseignées par la demande de brevet EP 0 701057. Ce document enseigne une tubulure qui comprend pour chaque chambre de combustion au moins deux conduits d'air, dont un au moins est sélectivement fermé par un volet pivotant autour d'un axe transversal au conduit entre une position d'obturation, au moins partielle et une position d'ouverture du conduit. Dans ce genre de dispositif, selon l'art antérieur, l'axe d'actionnement des volets en métal est monté dans la pièce moulée en thermoplastique constituant le corps de la tubulure à l'aide de tourillons et de bagues nécessitant des joints pour assurer l'étanchéité de l'axe au niveau de la jonction avec les pièces plastiques.

Dans un tel dispositif, les bagues peuvent être pourvues de moyens souples ou élastiquement déformables afin de limiter le jeu radial de l'arbre par rapport au corps de l'appareil qui est en thermoplastique.

Compte tenu de ces possibilités de jeu, les questions d'alignement d'axes et de rotation de l'axe par rapport à la pièce plastique sont traitées par les pièces additionnelles. Ceci a comme inconvénient de nécessiter la fabrication et la mise en place de pièces supplémentaires dans la pièce thermoplastique. Un premier inconvénient est l'augmentation du coût de fabrication. En outre, cette constitution oblige à former des capots, des emplacements, des tourillons et des canons qui peuvent être liés à la pièce principale par des soudures à ultrason ou par encliquetage. Cette dernière solution ne garantit pas forcément un bon maintien de l'axe de rotation par rapport au corps de l'appareil.

Dans une variante de réalisation de cet art antérieur, l'arbre commun d'entraînement est flexible et comporte des segments d'entraînement surmoulés, séparés par des portions flexibles. Cette flexibilité facilite le montage en permettant de compenser les désalignements plus importants des berceaux et des canons formant les paliers et la portée de rotation des différents volets. Le problème du désalignement des paliers est donc connu et l'homme de métier n'a pas trouvé jusqu'à ce jour de solution satisfaisante.

Aujourd'hui, pour résoudre le problème d'alignement des passages de broches dans des paliers successifs, il existe plusieurs autres solutions mais qui présentent chacune des inconvénients. Pour obtenir le résultat escompté, qui est de pouvoir engager librement une broche tournante dans les différents paliers d'une pièce suivant le même axe, il est nécessaire que les trous de passages soient en parfait alignement, si l'on veut que cette broche puisse tourner librement. Pour obtenir un résultat, on peut surmouler une broche que l'on retire ensuite, ce qui laisse subsister la possibilité d'un non alignement, après que la broche soit retirée, par des déformations dues aux tensions internes. On peut également percer la pièce sur toute la longueur. Ceci occasionne, compte tenu des longueurs en question, un flambage du foret, ce qui ne permet pas d'assurer l'alignement parfait. De toute façon, l'usinage fragilise la surface attaquée par le foret. Enfin, une dernière solution correspondant à celle du brevet européen est d'étudier la pièce pour la réaliser en plusieurs parties permettant les assemblages des paliers dans la pièce moulée.

La présente invention a comme premier but de résoudre ce problème d'alignement des paliers dans une pièce moulée en matière plastique par un procédé de fabrication nouveau.

Ce but est atteint par le fait que le procédé de fabrication de passage d'axes dans une pièce en matière plastique moulée comportant à intervalles réguliers des paliers pour un axe destiné à actionner au moins deux pièces mobiles, solidarisées à l'axe en des emplacements déterminés, lesdits paliers d'axes étant disposés dans la pièce en matière plastique moulée à des emplacements correspondant de chaque côté des emplacements des pièces mobiles caractérisé en ce qu'il consiste à ménager entre deux paliers adjacents associés chacun aux emplacements des pièces mobiles différentes, un évidement par l'avancée d'un tiroir de l'outil de moulage, et à former une portion de palier de chaque côté des emplacements de chaque pièce mobile par une cale mobile par rapport à un tiroir, la cale étant porteuse d'un plot destiné à former une portion de palier d'un côté de la pièce mobile

Selon une autre particularité, le plot est solidaire de la cale qui est interchangeable.

Selon une autre particularité, le plot est réglable et interchangeable.

Selon une autre particularité, le plot est monté dans un logement cylindrique de la cale au moyen d'un téton cylindrique excentré par rapport à l'axe de symétrie du plot et immobilisé dans la position souhaitée pour obtenir l'alignement des paliers avec les autres plots des autres cales par des moyens de fixation démontables.

Un autre but de l'invention est de proposer une utilisation du procédé de l'invention dans le domaine des systèmes d'admission pour moteur à combustion interne.

Ce but est atteint par le fait que le procédé est utilisé pour la fabrication d'un dispositif à volet destiné à être disposé entre la culasse et un système répartiteur d'air pour moteurs à combustion interne, le répartiteur comportant une pluralité de conduits d'air destinés à déboucher dans des chambres de combustion, le dispositif à volet permettant de réduire le ou les passages d'air entre le répartiteur et la ou les chambres à combustion par pivotement des volets, caractérisé en ce que le dispositif à volet comporte un corps d'appareil en matière plastique moulé dans lequel de chaque côté de chacun des passages dans lesquels sont disposés les volets, des paliers sont formés directement en une seule opération par moulage, lesdits paliers de deux passages différents associés à deux volets différents étant séparés par un évidement.

Selon une autre particularité, le dispositif est une bride à volet qui comporte une pluralité de passages d'air séparés entre eux par une pluralité d'évidements, les paliers étant formés dans les parois adjacentes aux passages et aux évidements, un second passage d'injecteur débouche dans chacun des passages en-dessous du plan contenant l'axe des volets, et parallèle au plan de la culasse.

Selon une autre particularité, la bride comporte des semelles formant deux plans parallèles délimitant les deux extrémités des passages, ces semelles étant pourvues de logements de fixation d'inserts, lesdits inserts étant taraudés pour la fixation du répartiteur et non taraudés pour le passage des boulons de fixation de la bride sur la culasse.

Selon une autre particularité, la face de la semelle qui comporte les inserts non taraudés et orientée vers la culasse est pourvue de gorges périphériques aux passages pour recevoir un joint d'étanchéité.

Selon une autre particularité, la face de la semelle en vis-à-vis du répartiteur comporte un prolongement conformé en demi-coquille destiné à recevoir soit un poumon pneumatique de commande par dépression de la rotation de l'axe du volet, soit un système électrique de commande de la rotation du volet.

Selon une autre particularité, la bride est intégrée au collecteur.

Un autre but de l'invention est de proposer un moule de fabrication de passages d'axes dans une pièce en matière plastique.

Ce but est atteint par le fait que le moule de fabrication de passages d'axes dans une pièce en matière plastique caractérisé en ce qu'il comporte des noyaux mobiles destinés à former au moins deux passages dans la pièce ; au moins un tiroir commandant les mouvements de deux cales mobiles solidaires de coulisseaux montés à coulissement transversalement dans le moule par rapport à la direction de déplacement vertical du tiroir ; les cales mobiles et les coulisseaux étant commandés en déplacement par des doigts respectifs disposés de chaque côté du tiroir et orientés dans deux directions angulaires opposées par rapport à la verticale de façon à produire les mouvements souhaités; Chaque tiroir respectif étant destiné à ménager entre les passages réservés, dans la pièce par les noyaux, des évidements dans lesquels les paliers d'un axe sont formés par des plots montés sur les extrémités des cales mobiles sur la face tournée vers la cloison de séparation entre l'évidement et le passage.

D'autres particularités et avantages de la présente invention apparaîtront plus clairement à la lecture de la description ci-après, faite en référence aux dessins annexés dans lesquels :
- la figure 1 représente une vue en coupe du dispositif permettant la mise en oeuvre du procédé selon un exemple de réalisation de l'invention ;
- la figure 2A représente une vue de côté en coupe partielle d'une cale mobile ;
- la figure 2B représente une vue de côté d'un plot monté dans une cale mobile en coupe ;
- la figure 2C représente une vue en perspective éclatée du système de moulage des paliers dans la bride ;
- la figure 2D représente une vue en perspective des cales mobiles associées à leurs coulisseaux ;
- la figure 2E représente une vue de dessous du système à cales mobiles et tiroir ;
- la figure 2F représente une vue de côté du système à cales mobiles;
- la figure 3A représente une vue en perspective par sa face inférieure d'une bride à volet dans laquelle le procédé selon un exemple de réalisation de l'invention est utilisé ;
- la figure 3B représente une vue en perspective par sa face supérieure de la même bride à volet ;
- la figure 3C représente une vue éclatée des différents composants montés dans la bride à volet ;
- la figure 4 représente une vue en perspective de l'emplacement d'une bride dans un moteur à combustion interne.

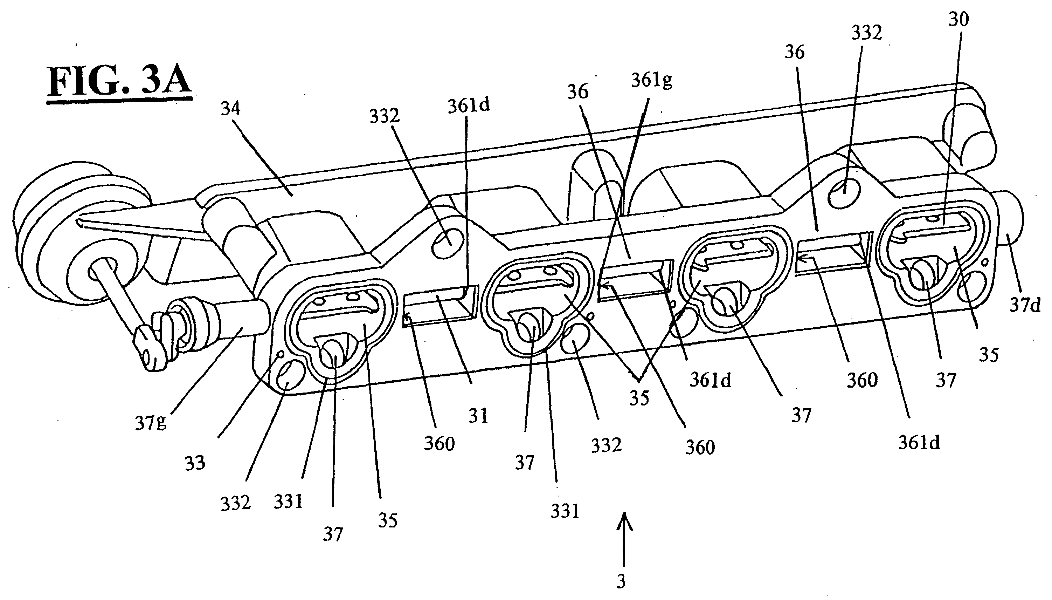

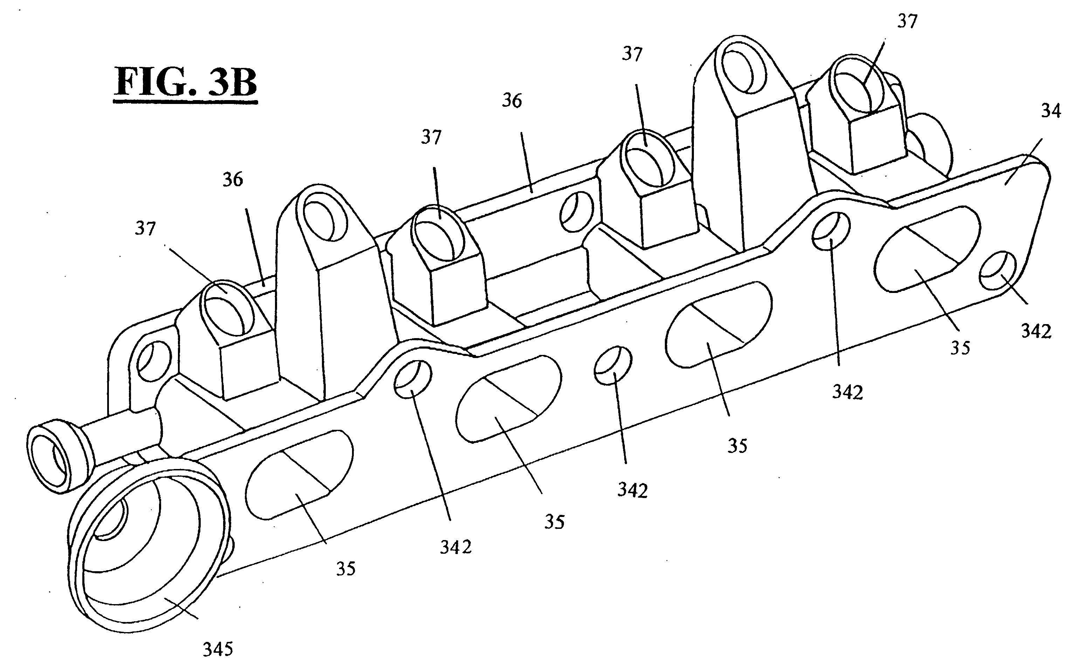

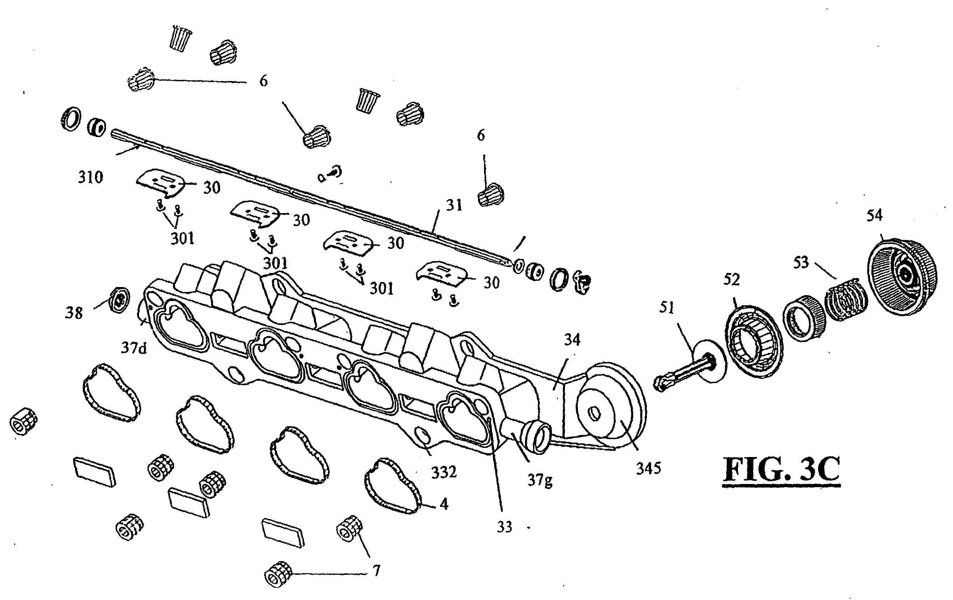

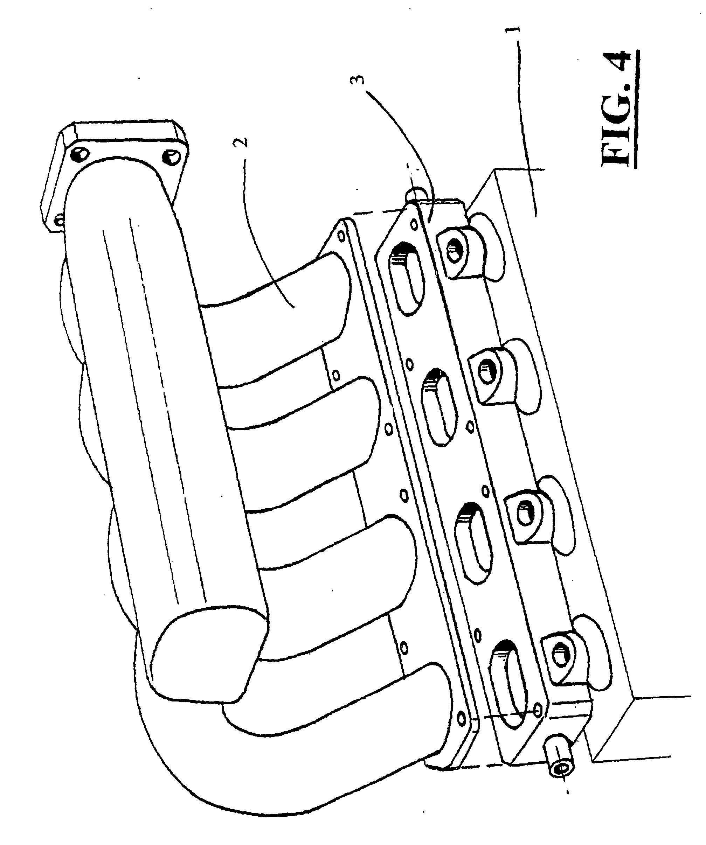

Un domaine d'application de l'invention concerne, par exemple, les moteurs à combustion interne représentés à la figure 4 dont la culasse (1) permet, par un dispositif appelé "bride" (3), la communication entre d'une part les cylindres et les chambres de combustion du bloc moteur et d'autre part, le dispositif d'admission des gaz constitués par une tubulure d'admission (2) ou collecteur. Cette bride (3) peut comporter comme représenté sur les figures 3A et 3C une série de volets (30) fixés chacun au moyen de paires de vis (301) sur un méplat (310) d'une pluralité de méplats (310) formés sur un axe (31) traversant transversalement la bride (3). La bride (3) comporte une semelle inférieure (33) et une semelle supérieure (34) dans lesquelles sont formées chacune des extrémités des passages (35) dans lesquels sont disposés les volets (30) destinés à obturer partiellement ou totalement ces passages. Ces passages (35) débouchent dans les plans des semelles inférieure (33) et supérieure (34). Les parois de matière plastique délimitant ces passages (35) sont liées entre elles par une entretoise (36) dans chacune desquelles est formé un évidement (360). Les parois séparant les évidements (360) et passages tubulaires (35) comportent des perçages gauches (361g) et droits (361d) qui constituent les paliers pour l'axe (31) de commande de la rotation des volets (30). A chaque extrémité de la bride (3) est formé un canon gauche (37 g) et droit (37 d). Le canon droit (37 d) est obturé par un bouchon (38). La semelle inférieure (33) est pourvue à la périphérie de chaque passage tubulaire (35) d'une gorge (331) destinée à accueillir un joint d'étanchéité (4). Les passages (332) dans la semelle inférieure (33) permettent la mise en place d'inserts (7), de passages des boulons de fixation de la bride (3) sur la culasse (1).

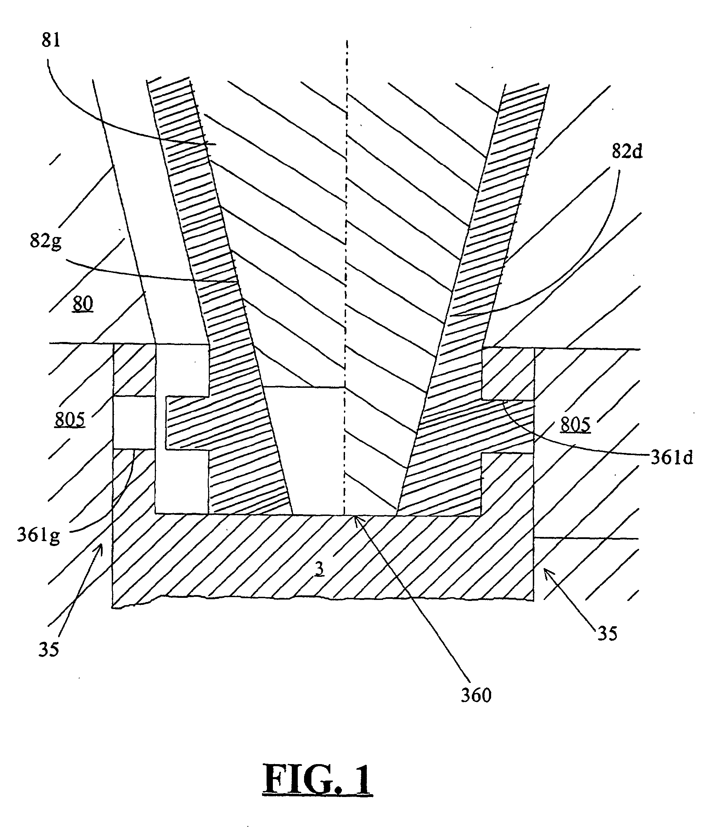

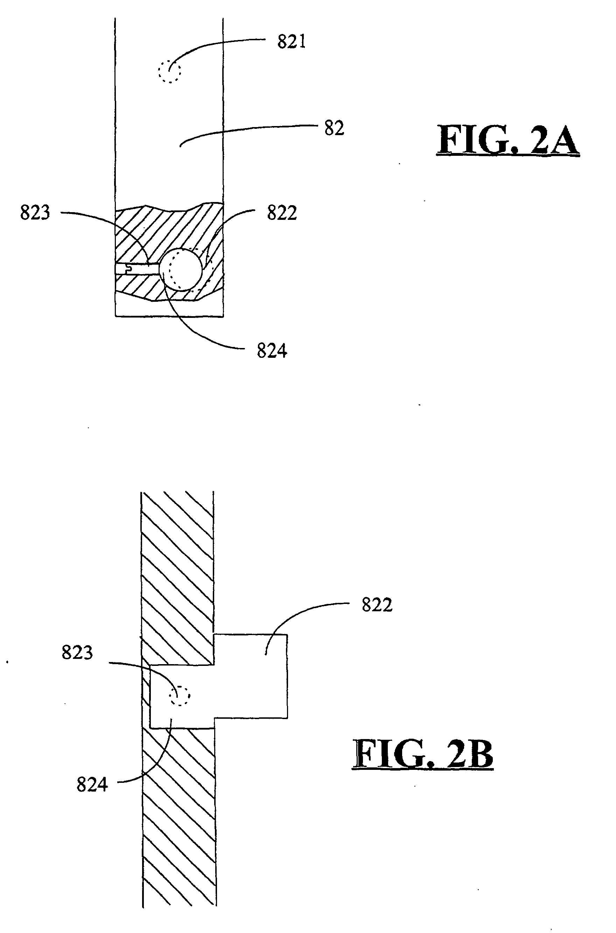

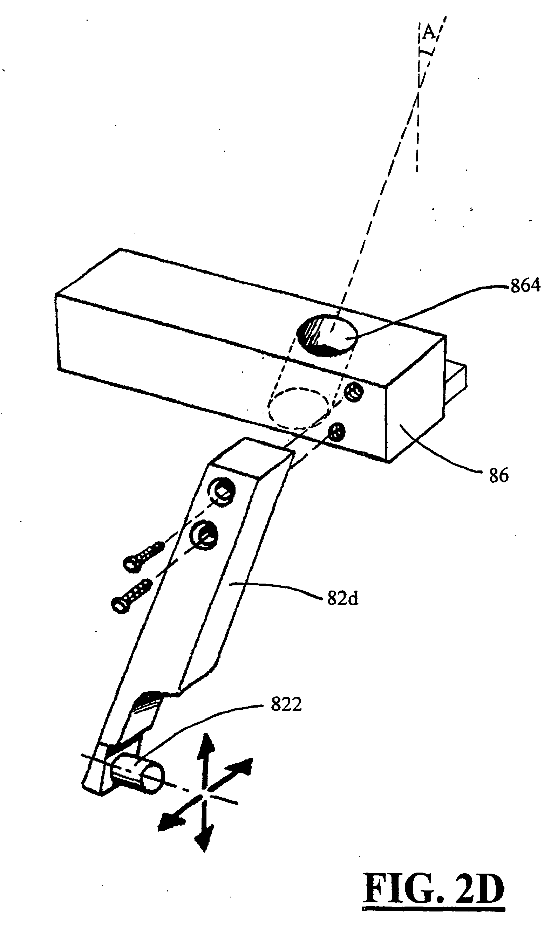

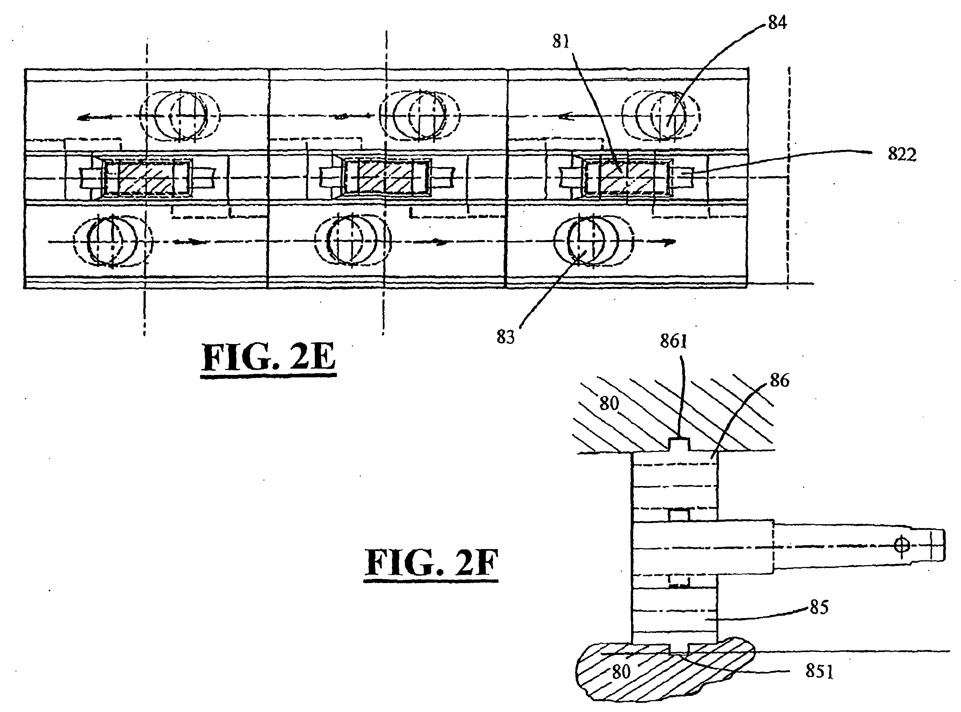

Des passages (342) dans la semelle supérieure (34) de fixation de la bride au répartiteur (2) permettent la mise en place d'inserts (6) taraudés destinés à recevoir les extrémités filetées des boulons de fixation du répartiteur (2). Cette semelle supérieure (34) comporte un prolongement au-dessus de l'extrémité du canon gauche (37 g). Ce prolongement forme un logement en forme de demi-coquille (345) pour constituer le demi-boîtier inférieur d'un poumon pneumatique à dépression comportant, comme représenté à la figure 3C, une tige d'actionnement (51) reliée par une manivelle à l'extrémité de la tige (31) formant l'axe de commande de la rotation des volets. Cette tige (51) est actionnée par une membrane (52) sollicitée en permanence vers sa position de repos en appui contre le fond (345) par une extrémité d'un ressort (53), dont l'autre extrémité est en appui sur la surface interne du couvercle (54) formant le demi-boîtier supérieur. Enfin, la bride (3) comporte une deuxième série de passages (37) dont les axes sont situés dans un même plan et sont concourants par rapport aux axes des passages (35) pour déboucher dans ces derniers (35) (comme représenté à la figure 3A) par un logement prévu en-dessous du niveau dans lequel est fixé l'axe de rotation (31). La pièce (3) est formée en une seule opération de moulage. Les paliers de maintien de l'axe (31) permettant la rotation de cet axe doivent être fabriqués dans la même opération de moulage et réalisés de façon à ce que leur alignement parfait permette la mise en place de l'axe sans aucune difficulté et sans avoir recourt à un axe de type flexible. Pour ce faire, dans ce type de pièces, le procédé de l'invention représenté dans les figures 1 à 2B est utilisé. La figure 1 représente en coupe une vue de l'évidement (360) obtenu dans la pièce (3) entre deux passages (35) adjacents. Cet évidement (360) qui débouche dans les passages (35) par les trous (361 g et 361 d) formant paliers, est obtenu lors de l'opération de moulage. Le moule (80) permet l'avancée d'un tiroir (81), lequel une fois en position réserve les évidements (360) dans la pièce (3). La presse d'injection commande, par des moyens, le déplacement des cales mobiles (82 g, 82 d). Ces cales mobiles sont pourvues sur leur face tournée vers les passages (35) d'un plot (822) destiné à former le palier respectif correspondant (361 g, 361 d). La mise en place des cales mobiles est commandée par un système de doigts (821, figure 2A) guidés dans des rainures prévues à cet effet dans le tiroir (81). Ces cales mobiles (82g, 82 d) peuvent être modifiées de façon à ajuster les positions et les tailles des trous des passages (361 g, 361 d) réservés dans la matière. La modification de la position du plot (822) d'une ou plusieurs cales par rapport aux autres permet d'assurer l'alignement parfait entre les différents paliers ainsi obtenus dans chacune des parois séparant un passage (35) d'un évidement (360). Il est bien évident que l'on a représenté un seul tiroir mais le moule comporte autant de tiroirs qu'il y a d'intervalles entre deux passages.

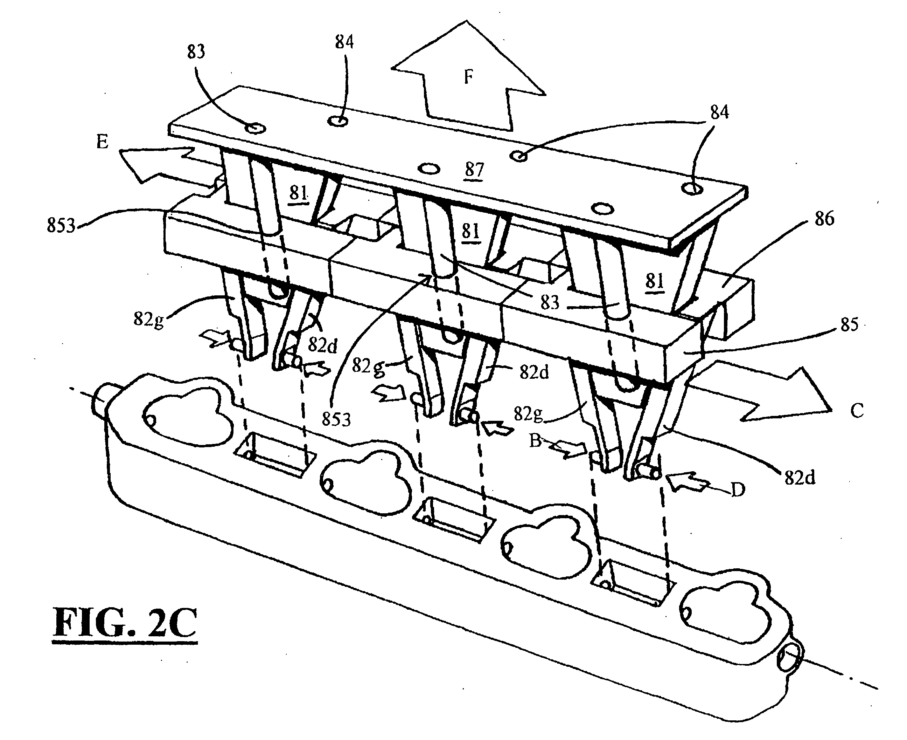

Comme on peut le voir sur la figure 2C, les cales mobiles gauches (82 g) et respectivement droites (82 d) sont chacune de leur côté associées respectivement à un coulisseau gauche (85) et droit (86) dans lequel sont formés les perçages gauches (853) et respectivement droits (864).

Dans les perçages (853) des coulisseaux gauches (85), pénètrent des tiges (83) fixées sur une semelle (87) avec une inclinaison d'un angle A dans le sens anti-horaire par rapport à la verticale.

De même, dans les perçages (864), pénètrent des tiges (84) montées sur une semelle avec une inclinaison d'un angle A dans le sens horaire par rapport à la verticale. Les perçages dans les coulisseaux respectifs sont orientés selon les mêmes angles que les tiges. Chaque tiroir (81) est également monté solidaire de la semelle (87) laquelle est actionnée en déplacement selon un mouvement vertical dans le corps du moule (80). Comme on peut le voir sur la figure 2F, chaque coulisseau gauche (85) et respectivement droit (86) comporte sur sa surface latérale opposée aux cales mobiles une rainure (851) respectivement (861) qui est guidée dans une gorge respective formée dans le corps du moule (80) de façon à permettre les mouvements des cales gauches selon la flèche B, droites selon la flèche D, lors du déplacement du coulisseau gauche selon la flèche C et du coulisseau droit selon la flèche E. Ce déplacement est occasionné lors de la descente du tiroir tronconique (81) et dans ce cas, les mouvements des cales sont orientés à l'inverse des flèches. Lors du mouvement du tiroir commandé par la semelle (87) dans le sens de la flèche F, la tige gauche (83) et respectivement droit (84) provoquent le déplacement des coulisseaux gauches (85) selon la flèche C et respectivement droits (86) selon la flèche E.

Dans une variante, la cale mobile peut être pourvue d'un plot (822) monté dans la cale à l'aide d'un excentrique (824) dont la position, une fois déterminée, est maintenue à l'aide d'une vis de blocage (823). On comprend ainsi qu'en desserrant la vis de blocage (823) et en faisant tourner le plot (822) par rotation de l'excentrique (824) dans son logement réservé dans la plaque (82) formant la cale mobile, on arrive ainsi à régler la position du passage (361 d ou 361 g) réservé dans la cloison. Ceci permet d'avoir un moyen aisé d'obtenir des réglages des alignements et une fois le moule réglé, la production de série peut être lancée.

Dans une variante de l'invention, les cales mobiles peuvent être prévues dans les noyaux cylindriques qui forment les passages (35). Dans ce cas, le tiroir formant les évidements ne comportera pas de cales mobiles.

Dans une autre variante de l'invention, la bride est intégrée au collecteur.

## Revendications

1. Procédé de fabrication de passages d'axes (35) dans une pièce en plastique moulée comportant à intervalles réguliers des paliers (361g, 361d) pour un axe destiné à actionner au moins deux pièces mobiles, solidarisées à l'axe en des emplacements déterminés, lesdits paliers d'axe étant disposés dans la pièce en matière plastique moulée à des emplacements correspondant de chaque côté des emplacements des pièces mobiles, **caractérisé en ce qu'**il consiste :
- à ménager entre deux paliers (361g, 361d) adjacents associés chacun aux emplacements des pièces mobiles différentes, un évidement (360) par l'avancée d'un tiroir (81) de l'outil de moulage,
- et à former une portion de palier de chaque côté des emplacements de chaque pièce mobile par une cale (82g, 82d) mobile par rapport à un tiroir (81), la cale étant porteuse d'un plot (822) destiné à former une portion de palier d'un côté de la pièce mobile.

2. Procédé selon la revendication 1, **caractérisé en ce que** le plot (822) est solidaire de la cale qui est interchangeable.

3. Procédé selon la revendication 1, **caractérisé en ce** le plot (822) est réglable et interchangeable.

4. Procédé selon la revendication 1 ou 3, **caractérisé en ce que** le plot (822) est monté dans un logement cylindrique de la cale (82g, 82d) au moyen d'un téton cylindrique excentré par rapport à l'axe de symétrie du plot (822) et immobilisé dans la position souhaitée pour obtenir l'alignement des paliers (361g, 361d) avec les autres plots des autres cales par des moyens de fixation démontables.

5. Utilisation du procédé selon l'une quelconque des revendications 1 à 4 pour la fabrication d'un dispositif à volet pour moteurs à combustion interne destiné à être disposé entre la culasse et l'admission, le dispositif à volet permettant de réduire le ou les passages d'air entre le répartiteur (2) et la ou les chambres à combustion par pivotement des volets (30), **caractérisé en ce que** le dispositif à volet comporte un corps d'appareil en matière plastique moulé dans lequel de chaque côté de chacun des passages (35) dans lesquels sont disposés les volets (30), des paliers (361g, 361d) sont formés directement en une seule opération par moulage, lesdits paliers de deux passages différents associés à deux volets (30) différents étant séparés par un évidement (360).

6. Utilisation selon la revendication 5, **caractérisé en ce que** le dispositif est une bride (3) à volet qui comporte une pluralité de passages (35) d'air séparés entre eux par une pluralité d'évidements (360), les paliers (361g, 361d) étant formés dans les parois adjacentes aux passages (35) et aux évidements (360), un second passage d'injecteur (37) débouchant dans chacun des passages (35) en dessous du plan contenant l'axe des volets, et parallèle au plan de la culasse (1).

7. Utilisation selon la revendication 6, **caractérisé en ce que** la bride (3) comporte des semelles (33, 34) formant deux plans parallèles délimitant les deux extrémités des passages (35), ces semelles étant pourvues de logements de fixation d'inserts (6, 7), lesdits inserts (6, 7) étant taraudés pour la fixation du répartiteur (2) et non taraudés pour le passage des boulons de fixation de la bride (3) sur la culasse (1).

8. Utilisation selon la revendication 7, **caractérisé en ce que** la face de la semelle (33) comportant les inserts non taraudés, orientée vers la culasse, est pourvue de gorges périphériques (331) aux passages (35) pour recevoir un joint d'étanchéité.

9. Utilisation selon la revendication 7, **caractérisé en ce que** la face de la semelle (33) en vis-à-vis du répartiteur (2) comporte un prolongement conformé en demi-coquille (345) destiné à recevoir soit un poumon pneumatique de commande par dépression de la rotation de l'axe du volet, soit un système électrique de commande de la rotation du volet.

10. Utilisation selon la revendication 6, **caractérisé en ce que** la bride (3) est intégrée au collecteur.

11. Moule de fabrication de passages d'axes dans une pièce en matière plastique, **caractérisé en ce qu'**il comporte :
- des noyaux (805) destinés à former au moins deux passages (35) dans la pièce ;
- au moins un tiroir (81) commandant les mouvements de deux cales (82g, 82d) mobiles solidaires de coulisseaux (86,85) montés à coulissement transversalement dans le moule par rapport à la direction de déplacement vertical du tiroir ;
- les cales mobiles (82g, 82d) et les coulisseaux étant commandés en déplacement par des doigts respectifs (83, 84) disposés de chaque côté du tiroir et orientés dans deux directions angulaires opposées par rapport à la verticale de façon à produire les mouvements souhaités;
- chaque tiroir (81) respectif étant destiné à ménager entre les passages réservés dans la pièce par les noyaux des évidements (360) dans lesquels sont formés les paliers (361g, 361d) d'un axe par des plots (822) montés sur les extrémités des cales mobiles (82g, 82d) sur la face tournée vers la cloison de séparation entre l'évidement (360) et le passage (35).

## Claims

1. Method for producing passages for spindles (35) in a moulded plastic component having bearings (361g, 361d) at regular intervals for a spindle designed to actuate at least two movable components secured to the spindle in set locations, the said spindle bearings being positioned in the component made of moulded plastic material at locations corresponding to each side of the locations of the movable components, **characterized in that** it consists:
- of producing, between two adjacent bearings (361g, 361d) each associated with the locations of different movable components, a recess (360) by the advance of a slide (81) of the moulding tool,
- and of forming a portion of a bearing on either side of the locations for each movable component by means of a wedge (82g, 82d) that can move with respect to the slide (81), the slide carrying a stud (822) designed to form a portion of a bearing on one side of the movable component.

2. Method according to claim 1, **characterized in that** the stud (822) is secured to the wedge which is interchangeable.

3. Method according to claim 1, **characterized in that** the stud (822) is adjustable and interchangeable.

4. Method according to claim 1 or 3, **characterized in that** the stud (822) is mounted in a cylindrical housing of the wedge (82g, 82d) by means of a cylindrical stub that is eccentric with respect to the axis of symmetry of the stud (822) and that is immobilized in the desired position for obtaining alignment of the bearings (361g, 361d) with the other stud of the other wedges by detachable fastening means.

5. Use of the method according to any one of claims 1 to 4, for producing a device with a flap for internal combustion engines designed to be positioned between the cylinder head and the intake, the device with a flap enabling the air passage(s) to be reduced between the divider (2) and the combustion chamber(s) by pivoting the flaps (30), **characterized in that** the device with a flap comprises a body made of moulded plastic material in which, either side of the passages (35) in which the flaps (30) are positioned, bearings (361g, 361d) are formed directly in a single operation by moulding, the said bearings of two different passages associated with two different flaps (30) being separated by a recess (360).

6. Use according to claim 5, **characterized in that** the device is a flange (3) with a flap which includes a plurality of air passages (35) separated from each other by a plurality of recesses (360), the bearings (361g, 361d) being formed in the walls adjacent to the passages (35) and to the recesses (360), a second injector passage (37) emerging in each of the passages (35) below the plane containing the spindles of the flaps, and parallel to the plane of the cylinder head (1).

7. Use according to claim 6, **characterized in that** the flange (3) includes sole plates (33, 34) forming two parallel planes delimiting the two ends of the passages (35), these sole plates being provided with housings for securing inserts (6, 7), the said inserts (6, 7) being threaded for the attachment of the divider (2) and non-threaded for the passage of the bolts fastening the flange (3) to the cylinder head (1).

8. Use according to claim 7, **characterized in that** the face of the sole plate (33) including non-threaded inserts, directed towards the cylinder head, is provided with grooves (331) peripheral to the passages (35) for receiving a seal.

9. Use according to claim 7, **characterized in that** the face of the sole plate (33) facing the divider (2) carries an extension formed into a half-shell (345) designed to receive either a pneumatic lung for controlling the rotation of the spindle of the flap by pressure reduction, or an electric system controlling the rotation of the flap.

10. Use according to claim 6, **characterized in that** the flange (3) is integral with the manifold.

11. Mould for producing passages for spindles in a component made of plastic material, **characterized in that** it comprises:
- cores (805) designed to form at least two passages (35) in the component;
- at least one slide (81) controlling the movements of two movable wedges (82g, 82d) secured to slide blocks (86, 85) mounted so as to slide transversely in the mould with respect to the vertical direction of movement of the slide;
- the movable wedges (82g, 82d) and the slide blocks being controlled in movement by fingers (83, 84) respectively positioned either side of the slide and directed in two opposite angular directions with respect to the vertical so as to produce the desired movements;
- each slide (81) respectively being designed to provide between the passages reserved in the component by the cores, recesses (360) in which are formed bearings (361g, 361d) for a spindle by means of studs (822) mounted on the ends of movable wedges (82g, 82d) on the face turned towards the separating partition between the recess (360) and the passage (35).

## Patentansprüche

1. Verfahren zur Herstellung von Durchgängen für Achsen (35) in einem gegossenen Kunststoffteil mit in regelmäßigen Abständen angeordneten Lagern (361g, 361d) für eine Achse, die dazu dient, mindestens zwei bewegliche Teile zu betätigen, die mit der Achse an vorgegebenen Stellen fest verbunden sind, wobei die Lager im gegossenen Kunststoffteil an entsprechenden Stellen beidseitig der Stellen für die beweglichen Teile angeordnet sind, **dadurch gekennzeichnet, daß**:
- zwischen zwei benachbarten Lagern (361g, 361d), die jeweils den Stellen der verschiedenen beweglichen Teile zugeordnet sind, eine Ausnehmung (360) durch den Vortrieb eines Schiebers (81) des Formwerkzeugs ausgebildet wird, und
- ein Lagerabschnitt beidseitig der Stellen jedes beweglichen Teils durch einen bezüglich eines Schiebers (81) beweglichen Keil (82g, 82d) gebildet wird, wobei der Keil ein Klötzchen (822) zur Bildung eines Lagerabschnitts auf einer Seite des beweglichen Teils trägt.

2. Verfahren nach Anspruch 1, **dadurch gekennzeichnet, daß** das Klötzchen (822) mit dem Keil fest verbunden, der austauschbar ist.

3. Verfahren nach Anspruch 1, **dadurch gekennzeichnet, daß** das Klötzchen (822) einstellbar und austauschbar ist.

4. Verfahren nach Anspruch 1 oder 3, **dadurch gekennzeichnet, daß** das Klötzchen (822) in einer zylindrischen Aufnahme des Keils (82g, 82d) mittels eines zylindrischen Zapfens eingebaut ist, der bezüglich der Symetrieachse des Klötzchens (822) exzentrisch und in der Position festgelegt ist, die gewünscht ist, um die Ausrichtung der Lager (361g, 361d) mit den weiteren Klötzchen der weiteren Keile durch abnehmbare Befestigungsmittel zu erhalten.

5. Verwendung des Verfahrens nach einem der Ansprüche 1 bis 4 zur Herstellung einer Klappenvorrichtung für Verbrennungsmotoren, die zwischen Zylinderkopf und Einlaß anzuordnen ist, wobei die Klappenvorrichtung es ermöglicht, den Durchgang oder die Durchgänge für die Luft zwischen dem Verteiler (2) und der Verbrennungskammer oder den Verbrennungskammern durch Schwenken der Klappen (30) zu verringern, **dadurch gekennzeichnet, daß** die Klappenvorrichtung ein Gehäuse aus gegossenem Kunststoff aufweist, in welchem auf jeder Seite der jeweiligen Durchgänge (35), in welchen die Klappen (30) angeordnet sind, Lager (361g, 361d) in einem einzigen Vorgang durch Formguß direkt gebildet werden, wobei die Lager zweier verschiedenen Durchgänge, die verschiedenen Klappen (30) zugeordnet sind, durch eine Ausnehmung (360) getrennt sind.

6. Verwendung nach Anspruch 5, **dadurch gekennzeichnet, daß** die Vorrichtung ein Flansch mit Klappe ist, die eine Vielzahl von Durchgängen (35) für die Luft aufweist, die voneinander durch eine Vielzahl von Ausnehmungen (360) getrennt sind, wobei die Lager (361g, 361d) in den den Durchgängen (35) und den Ausnehmungen (360) angrenzenden Wänden gebildet sind, wobei ein zweiter Durchgang für die Einspritzdüse (37) in jeden der Durchgänge (35) unterhalb der die Achsen der Klappen enthaltenden und parallel zur Ebene des Zylinderkopfes (1) liegenden Ebene mündet.

7. Verwendung nach Anspruch 6, **dadurch gekennzeichnet, daß** der Flansch (3) Platten (33, 34) aufweist, die zwei parallele Ebenen bilden, welche die beiden Enden der Durchgänge (35) begrenzen, wobei diese Platten mit Aufnahmen zur Befestigung von Einsätzen (6, 7) versehen sind, wobei die Einsätze (6, 7) zur Befestigung des Verteilers (2) mit Gewinde bzw. für das Durchführen von Bolzen zur Befestigung des Flansches (3) am Zylinderkopf (1) ohne Gewinde ausgeführt sind.

8. Verwendung nach Anspruch 7, **dadurch gekennzeichnet, daß** die dem Zylinderkopf zugewandte Seite der Platte (33), welche die Einsätzen ohne Gewinde aufweist, zur Aufnahme einer Dichtung mit umlaufenden Nuten (331) an den Durchgängen (35) versehen ist.

9. Verwendung nach Anspruch 7, **dadurch gekennzeichnet, daß** die dem Verteiler (2) gegenüberliegende Seite der Platte (33) einen halbschalenförmigen Ansatz (345) zur Aufnahme entweder eines pneumatischen Balgs zur Steuerung der Drehung der Klappenachse durch Unterdruck oder eines elektrischen Systems zur Steuerung der Drehung der Klappe aufweist.

10. Verwendung nach Anspruch 6, **dadurch gekennzeichnet, daß** der Flansch (3) im Sammler integriert ist.

11. Form zur Herstellung von Durchgängen für Achsen in einem Kunststoffteil, **dadurch gekennzeichnet, daß** sie enthält:
- Kerne (805) zur Bildung von mindestens zwei Durchgängen (35) in dem Teil;
- mindestens einen Schieber (81), der die Bewegungen von zwei Keilen (82g, 82d) steuert, die von Gleitstücken (86, 85) mitbewegt werden, die in der Form quer zur vertikalen Verschiebungsrichtung des Schiebers gleitend gelagert sind;
- wobei die Verschiebung der beweglichen Keile (82g, 82d) und Gleitstücke durch jeweilige Finger (83, 84) gesteuert wird, die beidseitig des Schiebers angeordnet und in zwei im Winkel entgegengesetzten Richtungen bezüglich der Senkrechten gerichtet sind, so daß die gewünschten Bewegungen ausgeführt werden,
- wobei der jeweilige Schieber (81) dazu dient, zwischen den im Teil durch die Kerne belegten Durchgängen Ausnehmungen (360) auszubilden, in welchen die Lager (361g, 361d) einer Achse durch Klötzchen (822) gebildet werden, die an den Enden der beweglichen Keile (82g, 82d) auf der Seite angebracht sind, die der Trennwand zwischen der Ausnehmung (360) und dem Durchgang (35) zugewandt ist.
